(19) Europäisches Patentamt
European Patent Office
Office européen des brevets

(11) **EP 2 186 428 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**17.01.2018   Patentblatt 2018/03**

(45) Hinweis auf die Patenterteilung:
**08.05.2013   Patentblatt 2013/19**

(21) Anmeldenummer: **09175617.1**

(22) Anmeldetag: **11.11.2009**

(51) Int Cl.:
*A41D 31/00* (2006.01)     *A62B 17/00* (2006.01)
*B32B 5/26* (2006.01)       *B32B 5/24* (2006.01)
*B32B 27/02* (2006.01)      *B32B 27/34* (2006.01)

(54) **Gewebeaufbau für Schutzbekleidung**

Tissue design for protective clothing

Montage de tissu pour vêtement de protection

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.11.2008   AT 17612008**
**04.05.2009   AT 6772009**

(43) Veröffentlichungstag der Anmeldung:
**19.05.2010   Patentblatt 2010/20**

(73) Patentinhaber: **Schneider, Otmar**
**5020 Salzburg (AT)**

(72) Erfinder: **Schneider, Otmar**
**5020 Salzburg (AT)**

(74) Vertreter: **Babeluk, Michael**
**Patentanwalt**
**Florianigasse 26/3**
**1080 Wien (AT)**

(56) Entgegenhaltungen:
EP-A1- 0 364 370          WO-A1-01/66193
WO-A1-99/35926          WO-A2-2008/127463
FR-A1- 2 846 202          US-A- 5 274 849
US-A1- 2008 263 744      US-B2- 6 397 401

EP 2 186 428 B2

**Beschreibung**

Die Erfindung betrifft einen Gewebeaufbau für eine Schutzbekleidung für Einsatzkräfte, mit einem Oberstoff, einem Futterstoff und einer zwischen Oberstoff und Futterstoff angeordneten Nässesperre, wobei die Nässesperre über eine Klimamembran verfügt, die auf einem Trägerstoff laminiert ist, und zwischen Oberstoff und Nässesperre eine zusätzliche Schicht mit im Wesentlichen gitterähnlichem Aufbau angeordnet ist, sowie deren Verwendung zur Herstellung von Schutzbekleidung für Einsatzkräfte, insbesondere Feuerwehrjacken und -hosen.

Mehrlagige Kleidungsstücke mit einem Oberstoff, einer Nässesperre und einem Futterstoff werden häufig in der Industrie sowie von Einsatzkräften, wie zum Beispiel Militär, Polizei oder der Feuerwehr getragen. Oftmals müssen diese Kleidungsstücke hitzefest, schwerentflammbar und reißfest sein, dürfen kein Wasser, wie Löschwasser oder Regen durchlassen, sollen aber Feuchtigkeit, die durch das Schwitzen entsteht, vom Körper des Trägers nach außen abgeben.

Üblicherweise ist der Oberstoff aus einem hitzefesten und schwerentflammbaren Material gefertigt, während die Nässesperre zwischen Oberstoff und Futterstoff angeordnet ist und einen zweilagigen Aufbau aufweist. Hierbei ist eine Klimamembran auf einem Trägerstoff aufgebracht, die einerseits von außen eindringende Feuchtigkeit wie Regen oder Löschwasser von der Haut des Trägers fernhält und andererseits auf der Haut entstehende Feuchtigkeit an die äußere Oberfläche des Kleidungsstückes transportiert. Zu diesem Zweck ist die Klimamembran der Nässesperre zum Oberstoff hin angeordnet, während das Trägermaterial der Nässesperre zum Futterstoff hin angeordnet ist. Der Futterstoff ist gegebenenfalls mit einem zusätzlichen Vlies versteppt.

Ein derartiger Gewebeaufbau weist üblicherweise ein spezifisches Gewicht von 600 g/$m^2$ oder mehr, sowie einen Wasserdampfdurchgangswiderstand Ret von 25 - 30 $m^2$Pa/W auf. Dieser Ret-Wert ist ein Maß für die Atmungsaktivität des Materials, wobei mit geringeren Werten eine höhere Atmungsaktivität erzielt wird. Eine höhere Atmungsaktivität des Materials verringert den Hitzestress, wodurch insbesondere ein Kreislaufzusammenbruch durch Überhitzung, beispielsweise an heißen Tagen und bei Brandeinsätzen im Innenbereich vermieden wird. Gleichzeitig ist es jedoch notwendig, die Wasserdichtigkeit der Schutzbekleidung zu erhalten oder zu verbessern, ebenso wie den Wärmeübergang. Wie wichtig dieser Ret-Wert ist, ist beispielsweise in der EN 343:2007 (Schutzbekleidung gegen Regen) dokumentiert. Hier wurden drei Klassen geschaffen:

| | |
|---|---|
| Klasse 1 (schlechteste Klasse): | Ret > 40 $m^2$Pa/W, |
| Klasse 2 : | $20 \leq$ Ret $\leq 40$ $m^2$Pa/W |
| Klasse 3: | Ret $\leq 20$ m2Pa/W |

Hierbei hat eine Schutzbekleidung gemäß Klasse 1 eine nur begrenzte Tragedauer.

Zur Klassifizierung von Schutzbekleidung stehen zahlreiche weitere Normen zur Verfügung, mit deren Hilfe das Material bzw. der Gewebeaufbau unterschiedlichen Leistungsklassen zugeordnet werden kann.

Da Schutzbekleidung für die Brandbekämpfung nach EN 469:2005 + A1:2006 hohe Anforderungen an die Isolation des Materialaufbaus stellt und dadurch naturgegeben die Atmungsaktivität darunter leidet, wurde bei der Festlegung des Ret in der EN 469 darauf Rücksicht genommen und die beste Klasse mit Ret $\leq$30 $m^2$Pa/W festgelegt. Würden die Ret-Grenzwerte der Leistungsklassen nach EN 343:2007 auch in der EN 469:2005 gefordert sein, wäre die Bereitstellung von Schutzbekleidung für die Feuerwehr nach EN 469:2005 nicht oder nur in einem sehr eingeschränktem Bereich möglich.

Neuartige Gewebekonstruktionen verbessern zwar die Atmungsaktivität auf ca. 20 $m^2$Pa/W, ohne dabei jedoch eine wesentliche Verbesserung der Werte für die Wärmeübergänge Xf und Xr zu erzielen.

Die EN 367 beschreibt den Wärmeübergang Xf bei Flammeinwirkung, wobei in einer ersten Leistungsstufe der Hitztransferindex $HTI_{24} \geq 9{,}0$ Sekunden und $HTI_{24}$ - $HTI_{12} \geq 3$ s betragen muss, während in der höheren Leistungsstufe 2 ein $HTI_{24} \geq 13{,}0$ s und $HTI_{24}$ -$HTI_{12} \geq 4$ s zu erreichen ist.

Der $HTI_{12}$ bzw. $HTI_{24}$ bezeichnet jene Zeit, in der sich die Temperatur auf der Rückseite eines Materials von der Umgebungstemperatur (zumeist 25°C) um 12°C bzw. 24°C erhöht, wenn an der Vorderseite eine Flamme an das Material gehalten wird. Da bei einer Temperaturerhöhung um 12°C üblicherweise der Träger der Schutzkleidung einen ersten Schmerz verspürt und bei einer Temperaturerhöhung um 24°C die ersten Brandverletzungen auftreten, ist insbesondere die Differenz der beiden Werte ein Maß für jene Zeit, die dem Träger der Schutzkleidung zur Verfügung steht, sich aus einem Gefahrenbereich zu entfernen, sobald er einen ersten Schmerz aufgrund von beispielsweise Flammeneinwirkung verspürt.

Die EN ISO 6940 betrifft den Wärmeübergang Xr bei Strahlungseinwirkung, wobei in der Stufe 1 ein Strahlungshitzetransferindex $RHTI_{40} \geq 10{,}0$ s und $RHTI_{24}$ - $RHTI_{12} \geq 3$ s und in der Stufe 2 ein $RHTI_{40} \geq 18{,}0$ s und $RHTI_{24}$ - $RHTI_{12} \geq 4$ s zu erreichen sind.

In der EN 20811 sind die Leistungsstufen für die Wasserdichtigkeit Y beschrieben, wobei ein Druckanstieg von < 20 kPa der Leistungsstufe 1 und ein Druckanstieg von $\geq$ 20 kPa der Leistungsstufe 2 zuzuordnen ist.

Der Wasserdampfdurchgangswiderstand ist ebenso in der EN 31092 geregelt, wobei in der Leistungsstufe 1 ein Ret-Wert von > 30 m$^2$Pa/W und in der Leistungsstufe 2 m$^2$Pa/W von $\leq$ 30 m$^2$Pa/W gefordert sind.

Der oben beschriebene Gewebeaufbau gemäß dem Stand der Technik erfüllt im Allgemeinen die Bedingungen für die Leistungsstufe 2.

Um den Tragekomfort zu verbessern, wurden für Einsatzkräfte, an deren Schutzkleidung keine hohen Anforderungen hinsichtlich der Hitzefestigkeit gestellt werden, Gewebeaufbauten entwickelt, bei welcher die Klimamembran direkt auf den Futterstoff laminiert wird, um das spezifische Gewicht der Schutzbekleidung auf 380 g/m$^2$ bis 450 g/m$^2$ zu senken. Eine derartige Schutzbekleidung weist zudem üblicherweise einen besseren Ret-Wert gegenüber den oben beschriebenen zumindest dreilagigen Gewebeaufbauten auf. Dieser im Wesentlichen zweilagige Gewebeaufbau gemäß dem Stand der Technik erfüllt im allgemeinen die Bedingungen für die Leistungsstufe 3 nach der EN 343:2007. Allerdings ist ein derartiger Gewebeaufbau aufgrund seiner zu geringen Hitzebeständigkeit für die Schutzbekleidung beispielsweise für die Feuerwehr nur eingeschränkt geeignet.

Die WO,2001/66193 A1 beschreibt einen Gewebeaufbau der eingangs erwähnten Art, wobei ein zusätzlich isolierendes Gewebe zwischen Oberstoff und Nässesperre angeordnet ist. Diese zusätzliche Isolation verbessert zwar die Hitzebeständigkeit der Schutzbekleidung, verringert jedoch gleichzeitig den Feuchtigkeitstransport nach außen. Ebenso kann sich je nach Art des verwendeten Gewebes das Gewicht des Gewebeaufbaus signifikant erhöhen. Weitere ähnliche Aufbauten können auch der WO 2008/127463 A2, der EP 0 364 370 A1, der US 2008/0263744 A1, der FR 2 846 202 A1 oder der US 5,274,849 A entnommen werden.

Es ist daher Aufgabe der Erfindung, ein Material zur Verfügung zu stellen, das eine erhöhte Atmungsaktivität bei höherem Schutz vor Brandverletzungen zur Verfügung stellt und die Ansprüche der Leistungsstufe 2 der oben genannten Normen nicht nur erfüllt, sondern verbesserte Werte gegenüber den bekannt gewordenen Materialien und gleichzeitig ein geringeres spezifisches Gewicht aufweist.

Diese Aufgabe wird erfindungsgemäß durch einen Gewebeaufbau der eingangs erwähnten Art dadurch gelöst, dass die zusätzliche Schicht ein Gestrick ist, wobei das Gestrick eine Waffelstruktur aufweist.

Erfindungsgemäß ist die zusätzliche Schicht ein Gestrick, das vorteilhafterweise ein spezifisches Gewicht von maximal 150 g/m$^2$ aufweist. Durch Verwendung eines gestrickten Materials nimmt das Gewicht des erfindungsgemäßen Gewebeaufbaues nur geringfügig im Hinblick auf das Gewicht eines Materialaufbaus gemäß dem Stand der Technik zu. Des weiteren weist das Gestrick naturgemäß eine unregelmäßige Oberfläche auf, wodurch ein zusätzlicher Luftpolster gebildet wird, der wiederum einen positiven Einfluss auf den Hitzeschutz ausübt.

Diese zusätzliche Schicht bewirkt eine erhöhte Hitzefestigkeit des Gewebeaufbaus, insbesondere wird eine Erhöhung des Hitzetransferindex und des Strahlungshitzetransferindex erzielt. Damit ist es den Einsatzkräften auch bei hohen Temperaturen möglich, länger am Einsatzort zu verweilen. Da erfindungsgemäß zwischen dem Oberstoff und der auf dem Futterstoff angeordneten Klimamembran ein zusätzliches Gestrick angeordnet ist, bleibt bei Verletzung des Oberstoffes, beispielsweise beim Aufreißen des Oberstoffes an scharfkantigen Gegenständen, der durch das zusätzliche Gestrick geschaffene Luftpolster erhalten, so dass hier eine weitere Verbesserung des Hitzeschutzes bei gleichzeitiger Verbesserung der Atmungsaktivität erzielt wird. Zugleich ist auch die mechanisch empfindliche Klimamembran geschützt und die Wasserdichtigkeit des Gewebeaufbaus bleibt bewahrt.

In einer weiteren bevorzugten Ausführung ist die Klimamembran der Nässesperre dem Futterstoff zugewandt. Untersuchungen des Anmelders haben gezeigt, dass bei Anordnung der Klimamembran zum Träger des Kleidungsstückes hin ein vermehrter Abtransport der Feuchtigkeit von der Hautoberfläche des Träger erfolgt, wodurch ein verbesserter Tragekomfort erzielt wird.

In einer weiteren Ausführung der Erfindung weist die Nässesperre auf ihrer dem Oberstoff zugewandten Seite des Trägerstoffes Distanzelemente auf. Die Verwendung von Distanzelementen zwischen Futterstoff und Nässesperre ist allgemein bekannt. Sie dienen insbesondere der Bildung eines isolierenden Luftpolsters, um die Hitzeeinwirkung auf den Träger zu verringern. In der vorliegenden Erfindung sind jedoch diese Distanzelemente zwischen Oberstoff und Nässesperre angeordnet und befinden sich bevorzugterweise auf der dem Oberstoff zugewandten Seite des Trägerstoffes, um eine Verbesserung der Atmungsaktivität zu erzielen.

Vorzugsweise sind die Distanzelemente aus Kunststoff gefertigt, gleichmäßig auf der dem Oberstoff zugewandten Seite des Trägerstoffes verteilt und im Wesentlichen noppenartig ausgebildet. Derartige "dots" sind besonders geeignet, einen Luftpolster zwischen dem zusätzlichen Gewebe sowie dem Trägerstoff der Nässesperre auszubilden und tragen damit wiederum zu einer verbesserten Hitzefestigkeit sowie Atmungsaktivität bei.

Alternativ hierzu weist in einer weiteren Ausführung der Erfindung der Oberstoff auf seiner der Nässesperre zugewandten Seite Distanzelemente auf. Vorzugsweise sind hierbei die Distanzelemente gleichmäßig auf der der Nässesperre zugewandten Seite des Oberstoffes verteilt und beispielsweise im Wesentlichen rippenartig ausgebildet.

Der oben beschriebene Gewebeaufbau eignet sich insbesondere für die Verwendung zur Herstellung von Schutzbekleidung für Einsatzkräfte, insbesondere für die Herstellung von Feuerwehrjacken und Feuerwehrhosen mit erhöhter Atmungsaktivität und verbessertem Hitzeschutz.

Im Folgenden wird anhand von nicht einschränkenden Ausführungsbeispielen mit zugehörigen Figuren die Erfindung näher erläutert. Darin zeigen:

Fig. 1a    einen dreilagigen Gewebeaufbau gemäß dem Stand der Technik;

Fig. 1b    einen zweilagigen Gewebeaufbau gemäß dem Stand der Technik;

Fig. 1c    einen weiteren dreilagigen Gewebeaufbau gemäß dem Stand der Technik;

Fig. 2    einen ersten erfindungsgemäßen Gewebeaufbau;

Fig. 3    einen zweiten erfindungsgemäßen Gewebeaufbau; und

Fig. 4    einen dritten erfindungsgemäßen Gewebeaufbau.

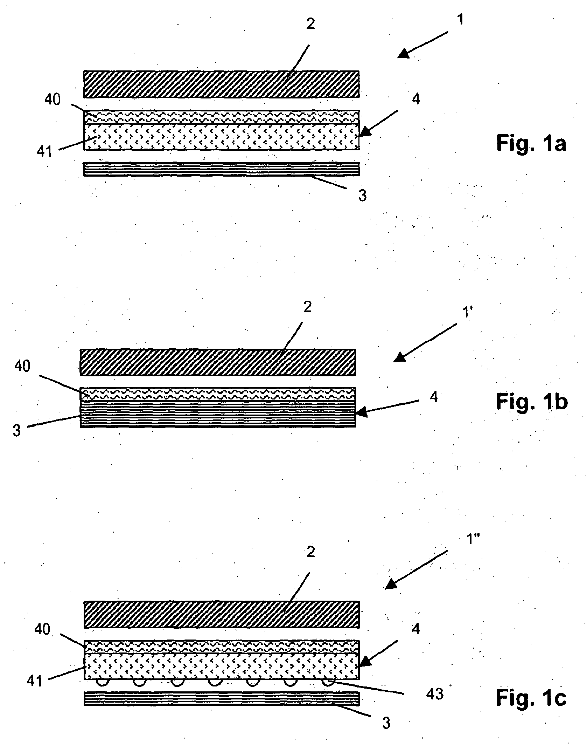

Der dreilagige Gewebeaufbau 1 gemäß Fig. 1a wird üblicherweise bei der Herstellung von Schutzkleidung für Einsatzkräfte insbesondere für die Brandbekämpfung eingesetzt. Er weist gemäß dem Stand der Technik einen Oberstoff 2 und einen Futterstoff 3 auf, wobei eine Nässesperre 4 zwischen Oberstoff 2 und Futterstoff 3 angeordnet ist. Das Futtergewebe 3 ist hierbei zumeist zusätzlich beispielsweise mit einem Thermovlies versteppt (nicht gezeigt).

Die Nässesperre 4 verfügt über eine Klimamembran 40, die dem Oberstoff 2 zugewandt ist. Diese Klimamembran 40 ist auf einen Trägerstoff 41 auflaminiert, der der Klimamembran 40 die notwendige mechanische Festigkeit gibt. Ein derartiger Schichtaufbau 1 von unterschiedlichen Materialien weist üblicherweise einen Wasserdampfdurchgangswiderstand (Ret) von etwa 25 m$^2$Pa/W bis 30 m$^2$Pa/W auf. Die Wärmübergänge Xf, Xr derartiger Schichtaufbauten betragen üblicherweise:

$$HTI_{24} = 18 \text{ - } 19 \text{ s} \qquad RHTI_{24} = 21 \text{ - } 22 \text{ s}$$

$$HTI_{24} \text{ - } HTI_{12} = 6 \text{ s} \qquad RHTI_{24} \text{ - } RHTI_{12} = 6 \text{ - } 7 \text{ s}$$

Das spezifische Gewicht dieses Gewebeaufbaus 1 beträgt hierbei an die 600 g/m$^2$ oder mehr.

In der Fig. 1b ist ein weiterer Gewebeaufbau 1' nach dem Stand der Technik dargestellt, bei welchem die Klimamembran 40 direkt auf dem Futterstoff 3 angeordnet ist. Eine mit diesem Gewebeaufbau 1' hergestellte Schutzbekleidung weist zwar ein geringes spezifisches Gewicht 380 g/m$^2$ bis 450 g/m$^2$ auf und erfüllt auch die Leistungserfordernisse für die Atmungsaktivität, allerdings machen die erzielbaren Werte für die Hitzebeständigkeit den Einsatz dieses Gewebeaufbaus 1' für Schutzkleidung für die Brandbekämpfung nur eingeschränkt möglich (siehe auch nachstehende Tabelle A).

Bisher wurde dieser Nachteil durch die Verwendung eines zusätzlichen Thermofutters, das zwischen der Nässesperre 4 und dem Träger der Schutzkleidung angeordnet ist, beseitigt (nicht dargestellt). Dies führt jedoch zu einer drastischen Reduktion der Atmungsaktivität sowie zu einer signifikanten Erhöhung des spezifischen Gewichts, so dass im Bereich der Schutzbekleidung für die Brandbekämpfung die ursprünglichen Vorteile dieses Gewebeaufbaus 1' praktisch wieder zunichte gemacht werden und kein Vorteil mehr gegenüber dem Gewebeaufbau 1 nach Fig. 1a zu erlangen ist.

Eine Verbesserung der Atmungsaktivität sowie des Hitzeschutzes lässt sich auch bei Gewebeaufbauten 1' nach dem Stand der Technik erzielen, die - wie beispielsweise in Fig. 1c beschrieben - auf der der Klimamembran 40 abgewandten Seiten des Trägerstoffes 41 der Nässesperre 4 Distanzelemente 43 aufweisen. Die Distanzelemente 43 sind beispielsweise aus einem elastischen Kunststoff gefertigt und im Wesentlichen gleichmäßig über die Oberfläche des Trägerstoffes verteilt. Sie bilden zum Futterstoff 3 hin einen Luftpolster, der gegen Hitzeeinwirkung von außen, beispielsweise einem Brand, als Isolierung wirken.

In manchen Fällen weisen Gewebeaufbauten nach dem Stand der Technik einen Futterstoff auf, der anstatt eines Thermovlieses in regelmäßigen Abständen rippenartige Strukturen in Form von etwa 1 mm - 2 mm dicken, auf dem Futtergewebe befestigte Kordeln (meistens in Kettrichtung) im Abstand von ca. 8 mm - 10 mm, aufweist. Ein derartiger Schichtaufbau besitzt üblicherweise einen Wasserdampfdurchgangswiderstand (Ret) von etwa 20 m$^2$Pa/W bis 23 m$^2$Pa/W. Die Wärmübergänge Xf, Xr derartiger Schichtaufbauten betragen üblicherweise:

$$HTI_{24} = 16,5 - 18\ s \qquad RHTI_{24} = 20 - 21\ s$$

$$HTI_{24} - HTI_{12} = 5,0\ s \qquad RHTI_{24} - RHTI_{12} = 5 - 6\ s$$

Der Wärmeübergang ist also bei verbesserter Atmungsaktivität schlechter als bei dem oben beschriebenen Beispiel gemäß Fig. 1a.

Wird diese Rippenstruktur jedoch an der der Nässesperre benachbarten Seite des Oberstoffes angebracht und die Klimamembran dem Futterstoff zugewandt, so wird die Atmungsaktivität des erfindungsgemäßen Gewebeaufbaus signifikant erhöht und gleichzeitig der Hitzeschutz verbessert.

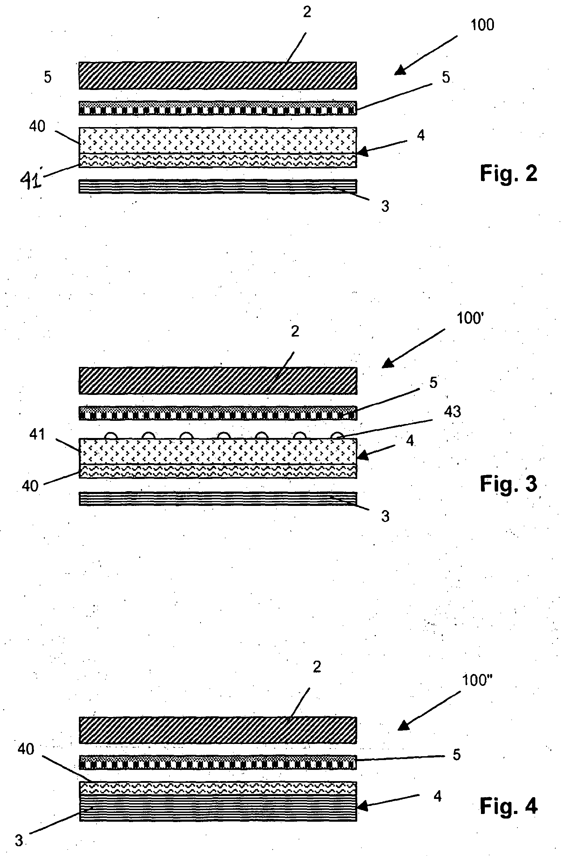

Nach Fig. 2 weist eine erste Ausführung des erfindungsgemäßen Gewebeaufbaus 100 ebenfalls einen Oberstoff 2 und einen Futterstoff 3 (allerdings ohne Thermovlies-Ausrüstung) sowie eine Nässesperre 4 auf, wobei die Klimamembran 40 der Nässesperre 4 dem Futterstoff 3 zugewandt ist. Zusätzlich ist zwischen Oberstoff 2 und Trägerstoff 41 der Nässesperre 4 ein Gestrick 5 angeordnet. Dieses Gestrick 5 wirkt als Isolationsgewebe bzw. Abstandshalter und erhöht einerseits den Wärmewiderstand bzw. die Hitztransferindizes HTI und RHTI um durchschnittlich 15% während sich die Atmungsaktivität bzw. der Wasserdampfdurchgangswiderstand Ret um durchschnittlich 35% gegenüber eines Gewebeaufbaues gemäß Fig. 1a verbessert.

Bei dem erfindungsgemäßen Gewebeaufbau 100' gemäß einer zweiten Ausführungsform nach Fig. 3 ist wiederum die Nässesperre 4 derart angeordnet, dass die Distanzelemente 43, die sogenannten "dots", dem zwischen Oberstoff 2 und Nässesperre 4 angeordneten Gestrick 5 zugewandt sind. Auch bei diesem Gewebeaufbau 100' hat sich gezeigt, dass der Wasserdampfdurchgangswiderstand Ret und damit die Atmungsaktivität des Materials 100' trotz des zusätzlichen Gestricks 5 etwas verbessert werden kann, während der Hitzeschutz um 30% bis 40% verbessert wurde.

In einer dritten Variante weist der erfindungsgemäße Gewebeaufbau 100" nach Fig. 4 trotz eines geringeren spezifischen Gewichts die erforderliche Hitzebeständigkeit sowie eine ausgezeichnete Atmungsaktivität auf. Hierbei ist zwischen dem Oberstoff 2, z.B. Nomex® (einem Aramidgewebe) und der Nässesperre 4, bei welcher die Klimamembran 40 beispielsweise mittels Punktverklebung mit dem Futterstoff 3, bevorzugterweise einem Mischgewebe aus Viskose und Aramid oder aber einem Gewebe aus reinem Aramid, unlösbar verbunden ist, ein Gestrick 5 angeordnet. Dieses Gestrick 5 wirkt als Isolationsgewebe bzw. Abstandshalter und erhöht einerseits den Wärmewiderstand bzw. die Hitzetransferindizes HTI und RHTI, während sich die Atmungsaktivität bzw. der Wasserdampfdurchgangswiderstand Ret um 10% bis 30% gegenüber eines Gewebeaufbaues gemäß Fig. 1a verbessert.

Durch das erfindungsgemäße Gestrick 5 insbesondere in Kombination mit der Anordnung der zum Stand der Technik spiegelverkehrt angeordneten Nässesperre 4, lässt sich die Atmungsaktivität des Gewebeaufbaus 100, 100', 100" sowie dessen Hitzefestigkeit wesentlich verbessern. Das Gestrick 5 weist eine durch geeignete Stricktechnik erzielte Waffelstruktur auf, so dass es ein großes Volumen bei geringem Gewicht aufweist. Auf diese Weise wird im Gestrick 5 selbst sowie in den Zwischenräumen zwischen Gestrick 5 und Nässesperre 4 bzw. Oberstoff 2 ein Luftpolster gebildet, der insbesondere die Hitzeeinwirkung auf den Träger der Schutzbekleidung sinken lässt. Des Weiteren schützt das Gestrick 5 die darunter liegende Nässesperre 4, wenn der Oberstoff 2 beispielsweise zerrissen wird oder durch Flammkontakt aufbricht. Es ist bevorzugt aus einem hitzeresistenten Material gefertigt und hält insbesondere auch mechanischen Belastungen stand.

Es versteht sich, dass die vorliegende Erfindung nicht auf die oben dargestellten Ausführungsformen beschränkt ist. Wesentlich für die Erfindung ist, dass ein zusätzliches Gewebe zwischen Oberstoff und Nässesperre angeordnet ist, während bevorzugterweise gleichzeitig die Klimamembran der Nässesperre dem Futterstoff zugewandt ist, um eine Erhöhung der Atmungsaktivität zu erzielen. Dieses zusätzliche Gewebe kann aus unterschiedlichsten Materialien gefertigt sein, hat jedoch bevorzugterweise ein großes Volumen bei geringem Gewicht durch seine gitterähnliche Struktur.

Tabelle A:

| Gewebeaufbau | Fig. | $HTI_{24}$ [s] | $HTI_{24-12}$ [s] | $RHTI_{24}$ [s] | $RHTI_{24-12}$ [s] | Ret [$m^2$Pa/W] | spez. Gewicht [g/$m^2$] |
|---|---|---|---|---|---|---|---|
| EN 469:2005 | --- | 13,0 | 4,0 | 18 | 4 | 30,00 | keine Erfordernisse |
| Nomex / Nässesperre / Steppfutter | 1a | 18,8 | 6,1 | 21,5 | 6,8 | 25,42 | 595 |
| Nomex / Futterliner | 1b | 7,8 | 2,5 | 9,7 | 3,2 | 13,64 | 400 |

(fortgesetzt)

| Gewebeaufbau | Fig. | $HTI_{24}$ [s] | $HTI_{24-12}$ [s] | $RHTI_{24}$ [s] | $RHTI_{24-12}$ [s] | Ret [$m^2Pa/W$] | spez. Gewicht [$g/m^2$] |
|---|---|---|---|---|---|---|---|
| Nomex / Nässesperre mit Abstandhalter / Futtergewebe | 1c | 18,2 | 6,0 | 19,7 | 6,4 | 19,29 | 565 |

| Gewebeaufbau | Fig. | $HTI_{24}$ [s] | $HTI_{24-12}$ [s] | $RHTI_{24}$ [s] | $RHTI_{24-12}$ [s] | Ret [$m^2Pa/W$] | spez. Gewicht [$g/m^2$] |
|---|---|---|---|---|---|---|---|
| Nomex / Gestrick / Futterliner | 4 | 18,5 | 5,9 | 20,7 | 6,1 | 17,45 | 490 |

**Patentansprüche**

1. Gewebeaufbau (100, 100', 100") für eine Schutzbekleidung für Einsatzkräfte, mit einem Oberstoff (2), einem Futterstoff (3) und einer zwischen Oberstoff (2) und Futterstoff (3) angeordneten Nässesperre (4), wobei die Nässesperre (4) über eine Klimamembran (40) verfügt, die auf einem Trägerstoff (3, 41) laminiert ist, und zwischen Oberstoff (2) und Nässesperre (4) eine zusätzliche Schicht (5) mit im Wesentlichen gitterähnlichem Aufbau angeordnet ist, **dadurch gekennzeichnet, dass** die zusätzliche Schicht (5) ein Gestrick ist, wobei das Gestrick eine Waffelstruktur aufweist.

2. Gewebeaufbau (100, 100', 100") nach Anspruch 1, **dadurch gekennzeichnet, dass** die zusätzliche Schicht (5) ein spezifisches Gewicht von maximal 150 $g/m^2$ aufweist.

3. Gewebeaufbau (100, 100', 100") nach einem der Ansprüche 1 oder 2, **dadurch gekennzeichnet, dass** die Klimamembran (40) der Nässesperre (4) dem Futterstoff (3) zugewandt ist.

4. Gewebeaufbau (100, 100', 100") nach einem der Ansprüche 1 bis 3, **dadurch gekennzeichnet, dass** die Nässesperre (4) auf ihrer dem Oberstoff (2) zugewandten Seite des Trägerstoffes (41) Distanzelemente (43) aufweist.

5. Gewebeaufbau (100, 100', 100") nach Anspruch 4, **dadurch gekennzeichnet, dass** die Distanzelemente (43) aus Kunststoff gefertigt sind, gleichmäßig auf der dem Oberstoff (2) zugewandten Seite des Trägerstoffes (41) verteilt sind und im Wesentlichen noppenartig ausgebildet sind.

6. Gewebeaufbau (100, 100', 100") nach Anspruch 4, **dadurch gekennzeichnet, dass** die Distanzelemente gleichmäßig auf der der Nässesperre (4) zugewandten Seite des Oberstoffes (2) verteilt und im Wesentlichen rippenartig ausgebildet sind.

7. Gewebeaufbau (100, 100', 100") nach einem der Ansprüche 1 bis 3, **dadurch gekennzeichnet, dass** die Klimamembran (40) der Nässesperre (4) auf dem Futterstoff (3) unlösbar angeordnet ist.

8. Gewebeaufbau (100, 100', 100") nach Anspruch 7, **dadurch gekennzeichnet, dass** der Oberstoff (2) auf seiner der Nässesperre (4) zugewandten Seite Distanzelemente aufweist.

9. Gewebeaufbau (100, 100', 100") nach einem der Ansprüche 1 bis 8 **gekennzeichnet durch** ein spezifisches Gewicht von $\leq$ 500 $g/m^2$.

10. Verwendung eines Gewebeaufbaus (100, 100', 100") nach einem der Ansprüche 1 bis 9 zur Herstellung von Schutzbekleidung für Einsatzkräfte, insbesondere von Feuerwehrjacken und -hosen.

**Claims**

1. A fabric structure (100, 100', 100") for protective clothing for emergency forces, comprising an outer fabric (2), a lining material (3), and a moisture barrier (4) arranged between outer fabric (2) and lining material (3), wherein the moisture barrier (4) has a climate membrane (40), which is laminated onto a carrier material (3, 41), and an additional layer (5) having a substantially latticed structure is arranged between outer fabric (2) and moisture barrier (4), **characterised in that** the additional layer (5) is a knitted material, wherein the knitted material consists of a waffle structure.

2. The fabric structure (100, 100', 100") according to claim 1, **characterised in that** the additional layer (5) has a specific weight of at most 150 g/m$^2$.

3. The fabric structure (100, 100', 100") according to one of claims 1 or 2, **characterised in that** the climate membrane (40) of the moisture barrier (4) faces toward the lining material (3).

4. The fabric structure (100, 100', 100") according to one of claims 1 to 3, **characterised in that** the moisture barrier (4) has spacer elements (43) on its side of the carrier material (41) facing toward the outer fabric (2).

5. The fabric structure (100, 100', 100") according to claim 4, **characterised in that** the spacer elements (43) are manufactured from plastic, are distributed uniformly on the side of the carrier material (41) facing toward the outer fabric (2), and are formed to be substantially nubby.

6. The fabric structure (100, 100', 100") according to claim 4, **characterised in that** the spacer elements are distributed uniformly on the side of the outer fabric (2) facing toward the moisture barrier (4) and are formed to be substantially ribbed.

7. The fabric structure (100, 100', 100") according to one of claims 1 to 3, **characterised in that** the climate membrane (40) of the moisture barrier (4) is inseparably arranged on the lining material (3).

8. The fabric structure (100, 100', 100") according to claim 7, **characterised in that** the outer fabric (2) has spacer elements on its side facing toward the moisture barrier (4).

9. The fabric structure (100, 100', 100") according to one of claims 1 to 8, **characterised by** a specific weight of $\leq 500$ g/m$^2$.

10. A use of a fabric structure (100, 100', 100") according to one of claims 1 to 9 for producing protective clothing for emergency forces, in particular firefighting jackets and trousers.

**Revendications**

1. Structure de tissu (100, 100', 100") pour un vêtement de protection pour des forces d'intervention comportant un matériau de recouvrement (2), un matériau de doublure (3) et une barrière de protection contre l'humidité (4) située entre le matériau de recouvrement (2) et le matériau de doublure (3), cette barrière de protection contre l'humidité étant équipée d'une membrane de climatisation (40) qui est laminée sur un matériau support (3, 41) et, entre le matériau de recouvrement (2) et la barrière de protection contre l'humidité (4) est disposée une couche supplémentaire (5) ayant une configuration essentiellement en treillis,
**caractérisée en ce que**
la couche supplémentaire (5) est un élément tricoté, l'élément tricoté comportant une structure gauffrée.

2. Structure de tissu (100, 100', 100") conforme à la revendication 1,
**caractérisée en ce que**
la couche supplémentaire (5) présente un poids spécifique maximum de 150 g/m$^2$.

3. Structure de tissu (100, 100', 100") conforme à l'une des revendications 1 et 2,
**caractérisée en ce que**
la membrane de climatisation (40) de la barrière de protection contre l'humidité (4) est tournée vers le matériau de doublure (3).

4. Structure de tissu (100, 100', 100") conforme à l'une des revendications 1 à 3,
**caractérisée en ce que**
la barrière de protection contre l'humidité (4) comporte des éléments d'écartement (43) sur sa face du matériau support (41) tournée vers le matériau de recouvrement (2).

5. Structure de tissu (100, 100', 100") conforme à la revendication 4,
**caractérisée en ce que**
les éléments d'écartement (43) sont réalisés en matériau synthétique, sont uniformément répartis sur la face du matériau support (41) tournée vers le matériau de recouvrement (2) et sont essentiellement réalisés sous la forme de boutons.

6. Structure de tissu (100, 100', 100") conforme à la revendication 4,
**caractérisée en ce que**
les éléments d'écartement sont uniformément répartis sur la face du matériau de recouvrement (2) tournée vers la barrière de protection contre l'humidité (4) et sont essentiellement réalisés sous la forme de nervures.

7. Structure de tissu (100, 100', 100") conforme à l'une des revendications 1 à 3,
**caractérisée en ce que**
la membrane de climatisation (40) de la barrière de protection contre l'humidité (4) est disposée de manière inamovible sur le matériau de doublure (3).

8. Structure de tissu (100, 100', 100") conforme à la revendication 7,
**caractérisée en ce que**
le matériau de recouvrement (2) comporte des éléments d'écartement sur sa face tournée vers la barrière de protection contre l'humidité (4).

9. Structure de tissu (100, 100', 100") conforme à l'une des revendications 1 à 8,
**caractérisée par**
un poids spécifique inférieur ou égal à 500 g/m$^2$.

10. Utilisation d'une structure de tissu (100, 100', 100") conforme à l'une des revendications 1 à 9, pour l'obtention de vêtement de protection destiné à les forces d'intervention, en particulier des vestes et pantalons pour pompiers.

Fig. 1a

Fig. 1b

Fig. 1c

2

5

100

5

40

41

4

**Fig. 2**

3

2

100'

5

43

41

4

40

**Fig. 3**

3

2

100"

40

5

4

**Fig. 4**

3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200166193 A1
- WO 2008127463 A2
- EP 0364370 A1
- US 20080263744 A1
- FR 2846202 A1
- US 5274849 A